# EUROPÄISCHE PATENTANMELDUNG

(11) **EP 1 782 903 A1**
(43) Veröffentlichungstag der Anmeldung: **09.05.2007**
(21) Anmeldenummer: 06021284.2
(22) Anmeldetag: 11.10.2006
(51) Int. Cl.: B23D 3/02, B62D 5/083

(54) **Verfahren zur Herstellung von Steuerbuchsen für kraftunterstützte Lenkungen und Steuerventil für eine kraftunterstützte Lenkung**

(30) Priorität: 04.11.2005 DE 102005053155
(71) Anmelder: ThyssenKrupp Presta SteerTec GmbH, 40476 Düsseldorf (DE)
(72) Erfinder: Heck, Hubert, 40629 Düsseldorf (DE); Schmitz, Wolfgang, 41334 Nettetal-Lobberich (DE)
(74) Vertreter: Lenzing, Andreas

(57) **Zusammenfassung**

Die Erfindung betrifft ein Verfahren zur Herstellung von Steuerbuchsen für kraftunterstützte Lenkungen, umfassend das Einspannen eines gegebenenfalls vorbearbeiteten Werkstücks in eine antreibbar um eine erste Achse (6a) drehbare Aufnahme (1) einer Bearbeitungsmaschine, ein Ausdrehen einer entlang der ersten Achse (6a) gerichteten Zentralbohrung (6) aus dem Werkstück (7) mittels eines ersten Werkzeugs, eine automatische Selektion eines zweiten Werkzeugs mittels einer Vorrichtung zur Werkzeugauswahl (3) und das Schälen einer Nut (8) aus einer Wandung der Zentralbohrung (6) mittels des zweiten Werkzeugs, wobei das zweite Werkzeug eine Relativbewegung zu dem Werkstück erfährt, die in Richtung der ersten Achse und in bezüglich der ersten Achse (6a) radialer Richtung verläuft und wobei das Werkstück in gegenüber Schritt a. unveränderter Aufspannung gehalten ist.

## Beschreibung

Die vorliegende Erfindung betrifft ein Verfahren zur Herstellung von Steuerbuchsen für kraftunterstützte Lenkungen, umfassend die Verfahrensschritte a. und b. des Anspruchs 1 sowie eine nach diesem Verfahren hergestellte Steuerbuchse. Die Erfindung betrifft zudem ein Steuerventil nach dem Oberbegriff des Anspruchs 16.

Ein weit verbreiteter Typ von kraftunterstützten Lenkungen weist eine hydraulische Krafteinleitungseinheit auf, deren Ansteuerung mittels eines eine Steuerbuchse und einen Drehschieber umfassenden Steuerventils vorgenommen wird. Dieses Steuerventil bildet hinsichtlich der Funktion der kraftunterstützten Lenkung ein zentrales Element. Seine Herstellung ist im Allgemeinen aufwendig und kostenintensiv, da sehr hohe Anforderungen an die Präzision der Bearbeitung und die Materialqualität zu stellen sind. Bereits kleine Abweichungen von den Sollvorgaben der Teilemaße können zu Fehlfunktionen, zumindest aber zu ungewünschten Geräuschen im Betrieb der hydraulischen Vorrichtung führen. Zugleich stellen Steuerventile für Servolen kungen Großserienbauteile dar, die einem entsprechenden hohen Kostendruck unterliegen.

DE 695 27 717 T2 beschreibt eine Bohrungsnutenfräsmaschine, bei der Längsnuten mittels einer Hin- und Herbewegung in eine Steuerbuchse einer Servolenkung einbringbar sind, wobei die Hin- und Herbewegung mittels eines Servoantriebssystems erzeugbar ist, wobei die Steuerbuchse in ihrer Aufnahme entlang einer ersten Achse antreibbar bewegbar und ein Schneidwerkzeug entlang einer zweiten Achse antreibbar bewegbar ist. Um eine Ausrichtung der Längsnuten an der Steuerbuchse mit hoher Genauigkeit sicherzustellen, ist ein Ausmessen der Steuerbuchsenbohrung nach einem Einspannen in der Bearbeitungsmaschine vorgesehen.

EP 0 579 677 B1 beschreibt eine Bearbeitungsmaschine zur Herstellung von Längsnuten in Steuerbuchsen von Servolenkungen, wobei durch eine antreibbar drehbare Aufnahme für die Steuerbuchse sowohl eine zentrale Bohrung der Steuerbuchse als auch die Längsnuten selbst herstellbar sind. Zur Herstellung der Längsnuten ist eine spezielle Antriebsmechanik eines oszillierend bewegten Schälwerkzeugs vorgesehen.

Es ist die Aufgabe der Erfindung, ein eingangs genanntes Verfahren anzugeben, mit dem die Herstellung von Steuerbuchsen kostengünstig und mit hoher Genauigkeit ermöglicht ist.

Diese Aufgabe wird für ein eingangs genanntes Verfahren erfindungsgemäß mit den Merkmalen des Anspruchs 1 gelöst.

Durch die automatisierte Selektion eines zweiten Werkzeugs ist der Vorgang der Ausdrehung einer Zentralbohrung und der Vorgang der Einbringung der Längsnuten auf vollständig automatisierte Weise ermöglicht. Hierdurch wird sowohl personeller Aufwand als auch Bearbeitungszeit für das Werkstück verringert. Durch die unveränderte Beibehaltung der gleichen Aufspannung des Werkstücks wird zudem auf einfache Weise sichergestellt, dass die Positionierung der Längsnuten bezüglich der ersten Achse mit hoher Genauigkeit erfolgt, so dass eine Kontrollmessung zwischen verschiedenen Bearbeitungsschritten der Steuerbuchse im Regelfall unterbleiben kann. Die Durchführung einer solchen Kontrollmessung steht der Erfindung jedoch nicht entgegen.

In einer besonders bevorzugten Ausführung ist die Bearbeitungsmaschine ein Standard-Drehzentrum. Unter einem Standard-Drehzentrum ist eine programmierbare CNC-Fertigungsmaschine zu verstehen, die mit keinen oder nur geringen Modifikationen in erheblichen Stückzahlen hergestellt wird und vorrangig Verwendung zur Herstellung anderer Werkstücke als Steuerbuchsen für Servolenkungen findet. Häufig sind solche Standard-Drehzentren zur Herstellung von Drehteilen vorgesehen. Aufgrund der hohen Genauigkeit und auch der Steifigkeit der verfahrbaren linearen Achsen von modernen Standard-Drehzentren hat sich gezeigt, dass diese zur Herstellung von Längsnuten von Steuerbuchsen geeignet sind. Beispiele für solche geeigneten Drehzentren sind die "Index SpeedLine C42" der Index-Werke GmbH und Co. KG aus D-73730 Esslingen sowie die Bearbeitungsmaschine "Twin 42" der Gildemeister Aktiengesellschaft, D-33689 Bielefeld.

Weiterhin bevorzugt erfolgt während der Relativbewegung des zweiten Werkzeugs aus Schritt d. eine simultane Bewegung von zumindest zwei Achsen der Bearbeitungsmaschine, wobei das Werkstück keine Bewegung erfährt. Durch die simultane Bewegung der zwei Achsen kann auch bei hoher Verfahrgeschwindigkeit eine genaue Form der Längsnut, insbesondere auch eine gebogene Form, eingehalten werden.

Weiterhin bevorzugt umfasst das Verfahren den weiteren Verfahrensschritt, dass eine zu der ersten Achse nicht parallele Bohrung mittels eines antreibbaren Werkzeugs vorgesehen wird, wobei das Werkstück in gegenüber a. unveränderter Aufspannung gehalten ist. Durch diese Anbringung von insbesondere radialen Bohrungen, beispielsweise in den Böden der Längsnuten, werden weitere Bearbeitungsschritte des Werkstücks auf der gleichen Bearbeitungsmaschine bei gleicher Aufspannung integriert, was Zeit und Kosten spart. Insbesondere Standard-Drehzentren sind zur Ausstattung mit antreibbaren Werkzeugen ausgerüstet. Die unveränderte Aufspannung ermöglicht eine besonders hohe Präzision bei der Anbringung der Bohrungen. Die Präzision ist insbesondere auch ausreichend, um hochgenaue Bohrungen zur Führung von Kugeldruck-Verstellelementen in der Steuerbuchse vorzusehen.

In besonders bevorzugter Ausführung umfasst das erfindungsgemäße Verfahren zudem eine abtragende Bearbeitung einer Längskante der Nut zur kontrollierten Herstellung einer Steuerkante, wobei das Werkstück in gegenüber a. unveränderter Aufspannung gehalten ist. Bevorzugt erfolgt diese Herstellung der Steuerkante der Steuerbuchse dabei mittels eines weiteren, für diesen Verfahrensschritt angepassten Werkzeugs. Insgesamt ermöglicht das erfindungsgemäße Verfahren somit erstmals die Herstellung von Steuerkanten auf Seiten der Steuerbuchse, wodurch die hydraulischen Eigenschaften wie insbesondere die Vermeidung von Geräuschen durch Turbulenzen der Hydraulikflüssigkeit im Bereich der Steuerkanten eines Steuerventils zusätzlich verbessert werden. Zweckmäßig ist hierfür ein eigenes Werkzeug vorgesehen, was bevorzugt ebenfalls automatisiert gewechselt werden kann, um die hinsichtlich der Genauigkeit besonders hohen Anforderungen unterliegende Kantenbearbeitung der Längsnut zuverlässig zu ermöglichen.#

Allgemein bevorzugt umfasst die Vorrichtung zur Werkzeugauswahl einen Werkzeugrevolver, wodurch hohe Genauigkeit, Flexibilität und Geschwindigkeit beim automatisierten Wechsel von Werkzeugen ermöglicht ist.

In einer bevorzugten Weiterbildung des erfindungsgemäßen Verfahrens ermöglicht die Vorrichtung zur Werkzeugauswahl zumindest für das zweite Werkzeug eine vollständig formschlüssige Halterung des Werkzeugs. Vollständig formschlüssige Halterungen sind aus dem Stand der Technik bekannt und ermöglichen im Unterschied zu reibschlüssigen Halterungen eine wohldefinierte und reproduzierbare Halterung des Werkzeugs, sodass Ungenauigkeiten am Werkstück, die durch Setzeffekte der Werkzeugshalterung verursacht sind, verringert werden.

Allgemein bevorzugt weist der Verfahrensschritt d. eine Anzahl von aufeinander folgenden Schälbewegungen, insbesondere Stoßbewegungen auf. Vorteilhaft ist dabei eine während einer der Schälbewegungen erzielte Schältiefe größer als die Schältiefe einer dieser Schälbewegung nachfolgenden Schälbewegung. Hierdurch wird eine hohe Herstellungsgeschwindigkeit einer Längsnut mit einer hohen Endgenauigkeit der Nut kombiniert.

Bevorzugt weist der Boden der Nut eine Krümmung von zumindest annähernd konstantem Radius auf. Hierdurch wird er sowohl Anforderungen an die Form der Nut als auch Anforderungen an die Führung des Schälwerkzeugs gerecht, welches während der Schälbewegung im Allgemeinen einen veränderlichen Freiwinkel aufweist. Dieser veränderliche Freiwinkel ist durch die Erzeugung der Schälbewegung durch Interpretation zweier linearer Achsen bedingt, was hinsichtlich des Freiwinkels eine andere Bewegung des Schälwerkzeugs ergibt als es bei Bewegung des Schälwerkzeugs um eine Drehachse der Fall wäre. In einer bevorzugten Ausführung liegt dabei das Verhältnis zwischen dem Krümmungsradius der Nut und einem Radius der Zentralbohrung zwischen etwa 1:1,7 und etwa 1:3. Besonders bevorzugt liegt dieses Verhältnis zwischen etwa 1:2 und etwa 1:2,5. Durch diese Wahl der Größenverhältnisse der Radien kann allgemein eine zuverlässige Schälbewegung im Inneren der ausgebohrten Steuerbuchse erfolgen, ohne das der Freiwinkel kritisch wird. Der Krümmungsradius des Bodens kann alternativ auch einen über seine Länge veränderlichen Radius aufweisen, solange die resultierenden Winkel des Schälwerkzeugs einen entsprechend kontrollierten Materialabtrag zulassen.

In einer vorteilhaften Ausführung wird das Werkstück aus einem automatisiert zugeführten Materialstrang durch die Bearbeitungsmaschine geformt. Insbesondere werden dabei wenigstens zwei Werkstücke nacheinander aus dem Materialstrang geformt. Hierdurch ist eine automatisierte Fertigung nicht nur eines einzelnen Stücks, sondern gleich einer größeren Anzahl von Werkstücken aus einem zumindest quasi-endlosen Materialstrang ermöglicht; es kann sich bei dem Materialstrang aber auch um einen automatisch zugeführten, für jeweils eine Steuerbuchse abgelängten Rohling aus einem Magazin handeln.

Die Aufgabe der Erfindung wird zudem durch eine Steuerbuchse gelöst, die nach einem der Ansprüche 1-14 hergestellt wird.

Es ist eine weitere Aufgabe der Erfindung, ein Steuerventil für eine kraftunterstützte Lenkung anzugeben, das verbesserte und insbesondere geräuschreduzierte Eigenschaften zumindest im Grenzbereich einer Ventilöffnung aufweist.

Diese Aufgabe wird für ein eingangs genanntes Steuerventil erfindungsgemäß mit den kennzeichnenden Merkmalen des Anspruchs 16 gelöst. Durch das Vorsehen einer zu einer Steuerkante ausgeformten Längskante an einer der Längsnuten der Steuerbuchse wird an dieser Stelle die Entstehung turbulenter Strömungen der Hydraulik vermieden, was zu einer Geräuschminderung und zu einer verbesserten Qualitätssicherung führt. Insgesamt ist dabei der Öffnungsvorgang des Steuerventils besser definiert, wodurch auch eine bessere Lenkungskontrolle gegeben ist.

In besonders bevorzugter Ausführung hat zudem zumindest eine der Längsnuten des Drehschiebers eine zu einer Steuerkante ausgeformte Längskante. Durch das Vorsehen einer Steuerkante sowohl an der Längsnut des Drehschiebers als auch der Längsnut der Steuerbuchse ist eine optimale Geräuschreduzierung durch eine Vermeidung von Turbulenzen der Hydraulikflüssigkeit erreicht und ebenso eine optimale Ansteuerung im Grenzbereich der Ventilöffnung gewährleistet.

Insbesondere bevorzugt ist die Steuerbuchse des erfindungsgemäßen Steuerventils nach dem Verfahren nach einem der Ansprüche 1-14 hergestellt, was die Fertigung dieser Steuerbuchse besonders kostengünstig und in hoher Qualität ermöglicht.

Weitere Vorteile und Merkmale der Erfindung ergeben sich aus dem nachfolgend beschriebenen Ausführungsbeispiel sowie den abhängigen Ansprüchen.

Nachfolgend wird ein bevorzugtes Ausführungsbeispiel der Erfindung beschrieben und anhand der anliegenden Zeichnungen näher erläutert.
- Fig. 1: zeigt eine räumliche Ansicht eines für das erfindungsgemäße Verfahren geeigneten Standard-Drehzentrums.

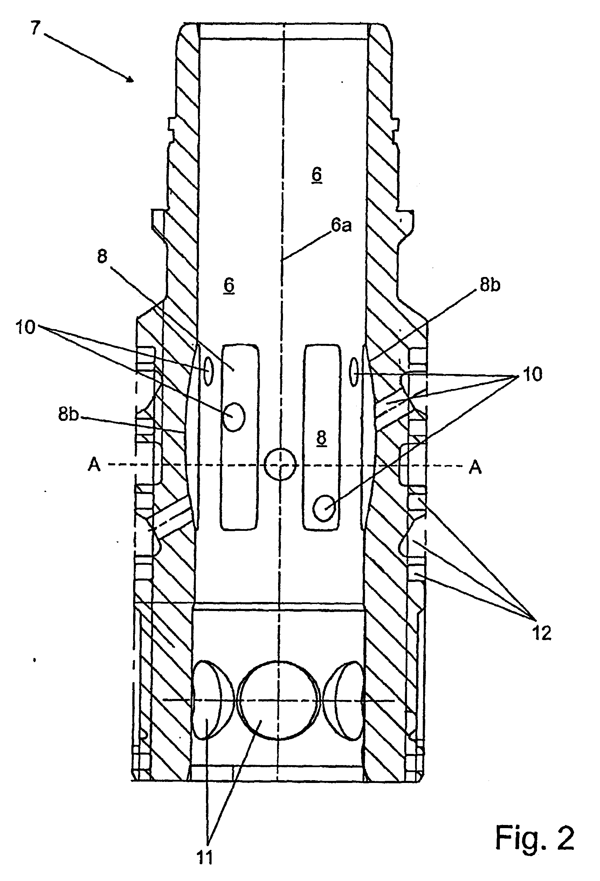

- Fig. 2: zeigt eine maßstabsgerechte Schnittansicht einer erfindungsgemäßen Steuerbuchse.
- Fig. 3: zeigt eine Schnittansicht der Steuerbuchse aus Fig. 2 entlang der Linie A-A.
- Fig. 4: zeigt eine Ausschnittsvergrößerung des Bereichs B aus Fig. 3.

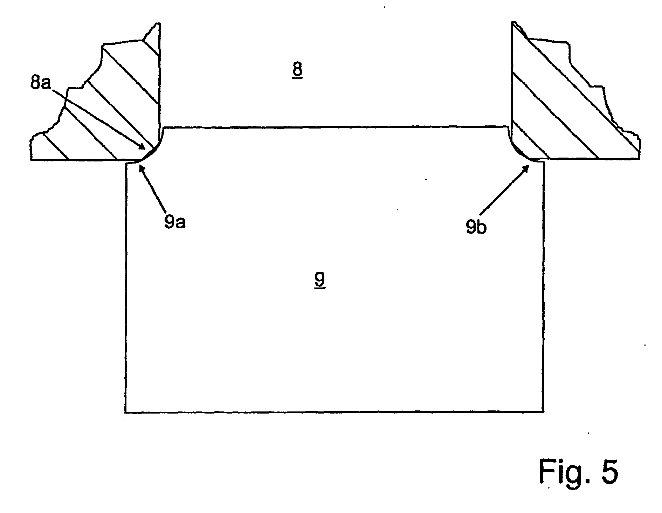

- Fig. 5: zeigt eine schematische Darstellung eines Werkzeugs zur Anbringung von Steuerkanten an Längsnuten einer Steuerbuchse.

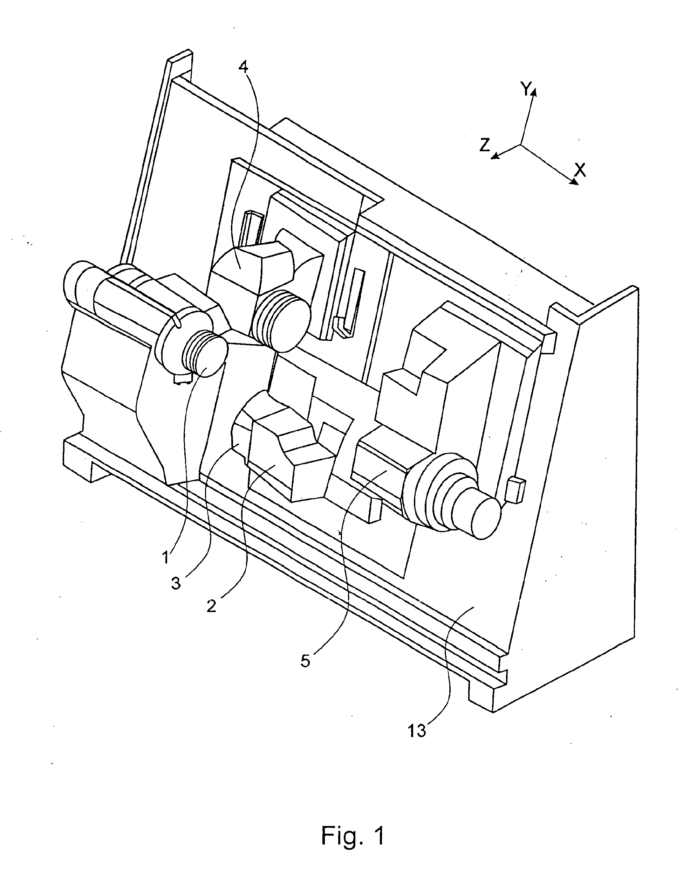

Die Bearbeitungsmaschine aus Fig. 1 zeigt eine schematische Darstellung des CNC-Drehzentrums "Index SpeedLine C42" der Index-Werke GmbH und Co. KG aus D-73730 Esslingen. Eine drehantreibbare Aufnahme bzw. Spindel 1 ist über nicht dargestellte Vorrichtungen mit Stangenmaterial automatisch beschickbar; das Stangenmaterial besteht aus einem für die Herstellung von Steuerbuchsen üblichen Stahl. In dieser Aufnahme 1 wird das Werkstück aus dem Stangenmaterial gearbeitet, wobei die Einspannung der Werkstücks in der Aufnahme 1 unverändert bleibt.

Ein Werkzeugträger 2 ist auf über hochgenaue Antriebe über zwei beweglich gelagerte Platten in X-Richtung und in Y-Richtung bewegbar (siehe Zeichnung), wobei die eine Bewegung der anderen überlagerbar ist.

Der Werkzeugträger 2 hat einen drehbaren Werkzeugrevolver 3, in dem mehrere Werkzeuge aufnehmbar sind. In der Darstellung gemäß Fig. 1 ist der Revolver nicht bestückt.

Ferner hat das Standard-Drehzentrum in der dargestellten Ausbaustuffe einen zweiten Werkzeugträger 4, der dem ersten Werkzeugträger 2 im wesentlichen entspricht sowie eine zweite Spindel 5. Die zweite Spindel 5 ist ähnlich wie die Wergzeugträger an bewegbaren Platte aufgenommen und kann in X- und Y-Richtung verfahren werden. Die Werkzeugträger 2, 4 und Spindeln 1, 5 sind sämtlich an einem sehr steifen Tragrahmen 13 der Bearbeitungsmaschine angeordnet.

Der Revolver 3 des ersten Werkzeugträgers 2 ist mit einem ersten Werkzeug zum Ausdrehen einer zentralen Bohrung 6 mit einer Borungsachse 6a der Steuerbuchse 7 bestückt, mit einem zweiten Werkzeug zum Stoßen einer Nut 8 in der Innenwandung der zentralen Bohrung 6 und mit einem Werkzeug 9 zur abtragenden Ausformung von Steuerkanten an den Längskanten der Nut. Das Werkzeug 9 ist hat spiegelsymmetrisch angeordnete Schneidkanten 9a, 9b mit leicht konkavem Verlauf. Jede der Schneidkanten 9a, 9b greift gleichzeitig an jeweils einer der Längskanten 8a der Nut 8 an. Das Steuerkanten-Bearbeitungswerkzeug 9 ist mit sehr hoher Präzision zu fertigen. Bei einem Werkzeugwechsel ist eine Kontrollmessung vorgesehen, mittels derer bei Anlage der Schneidkanten an definierten Punkten eine genaue Ausrichtung eines Nullpunkts sichergestellt wird.

Ein weiteres Werkzeug ist als antreibbares Werkzeug ausgebildet und umfasst einen Bohrer zur Ausbohrung von Bohrungen 10 der Steuerbuchse 7, die nicht parallel zu der Zentralbohrung 6 verlaufen, insbesondere radiale oder geneigte Bohrungen, die die Steuerbuchse 7 zur Durchleitung von Hydraulikflüssigkeit seitlich durchgreifen. Mittels eines weiteren angetriebenen Werkzeugs sind zudem Bohrungen 11 zur hochgenauen Führung von hydraulisch beaufschlagten Kugeln in gleicher Aufspannung herstellbar. Die Bohrungen 11 erfordern zur Sicherstellung der Funktion (Kugeldruckverstellung des Steuerventils) besonders kleine Maßtoleranzen.

### Das erfindungsgemäße Verfahren läuft nun wie folgt ab:

Zunächst wird der Materialstrang der Spindel 1 zugeführt. Nachfolgend wird aus dem Revolver 3 das erste Werkzeug ausgewählt. Mittels dieses Werkzeuges wird die zentrale Bohrung 6, die einen Durchmesser von 22 mm hat, ausgedreht. Das erste Werkzeug kann auch ein Satz von mehreren Werkzeugen sein, mittels derer eine Bearbeitung in verschiedenen Stufen, etwa vom Schruppen bis zum Feinschlichten, erfolgt. Hierdurch lässt sich auf bekannte Weise Zeit und Kosten einsparen.

Nachfolgend werden mittels eines weiteren automatisch selektierten Werkzeugs außenseitige drehsymmetrische Strukturen 12 eingebracht.

Wiederum nachfolgend wird das zweite Werkzeug 8 selektiert, welches ein Werkzeug zum Stoßen ist. Dieses Werkzeug wird durch den Werkzeugträger 3 in die Zentralbohrung 6 eingefahren. Nachfolgend wird durch wiederholte Bewegung auf dem Ausschnitt einer Kreisbahn, deren Radius etwa 50 mm beträgt, eine Längsnut 8 ausgeschält. Dabei wird die Schältiefe bzw. der Versatz des Mittelpunktes der Kreisbahn zunehmend kleiner gewählt, um bei insgesamt geringer Bearbeitungszeit eine gute Nutqualität zu gewährleisten. Die Kreisbewegung des Schälwerkzeugs ist eine interpolierte, wobei tatsächlich der Werkzeugträger 4 in X-Richtung und zugleich Y-Richtung verfahren wird. Die räumliche Orientierung des Schälwerkzeugs relativ zu dem Werkstück bleibt dabei unverändert, was über den Verlauf der gekrümmten Bahn zu einer Änderung des Freiwinkels führt.

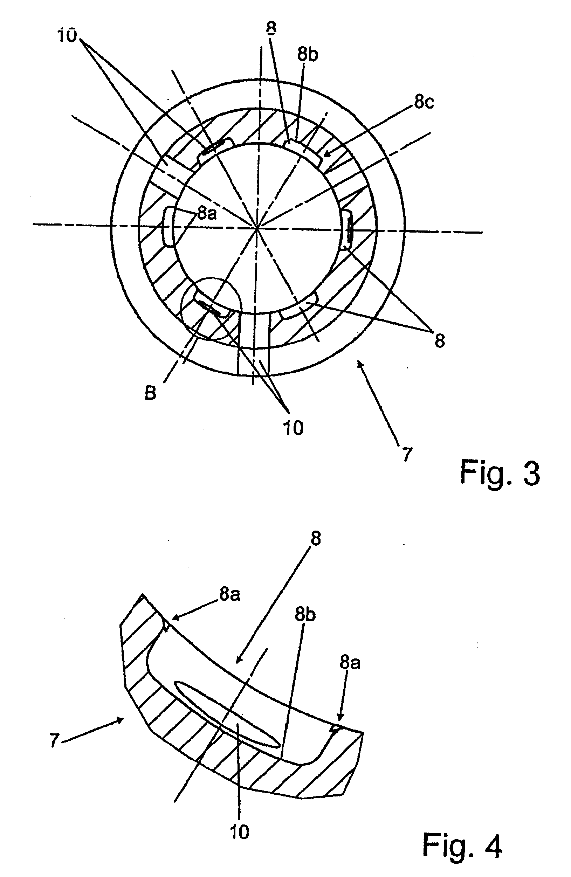

Das Schälwerkzeug und somit der Boden 8b der Nut 8 hat in Querrichtung (siehe Darstellung nach Fig. 3) einen Krümmungsradius von etwa 10 mm. Hierdurch ist eine gute Anpassung an die Krümmung der Zentralbohrung 6 in den endseitigen Bereichen der Längsnut 8 erreicht. Die Innenkanten 8c der Nut 8 bzw. die entsprechenden Außenkanten des Schälwerkzeugs haben einen Krümmungsradius von etwa 1 mm.

Nachfolgend wird das Werkstück bei weiterhin gleicher Einspannung um einen Winkel von 60° verdreht, wonach auf zuvor beschriebene Weise die nächste Längsnut eingebracht wird.

Nach Fertigstellung der vorliegend sechs Längsnuten wird automatisiert bei unveränderter Einspannung das Werkzeug 9 zur Bearbeitung der Nut-Längskanten durch den Revolver 3 selektiert. Durch ein- oder mehrfaches Abfahren der Längsnut 8 werden somit die Längskanten mit einer kleinen Phase von vorliegend 45° versehen (siehe auch Fig. 4), durch die eine Steuerkante 8a ausgebildet ist. Falls in gegebenenfalls weiteren Bearbeitungsschritten noch ein Honen der Bohrung 6 vorgesehen ist, vermeidet die Steuerkante zudem die Ausschmierung eines Grates im Bereich der Nut-Längskante.

Im nachfolgenden Fertigungsschritt wird ein weiteres Werkzeug selektiert, das als angetriebener Bohrer ausgebildet ist. Mit diesem präzise verfahrbaren Bohrer werden zumindest einige der Wandungsbohrungen 10 der Steuerbuchse eingebracht. Falls die Entgratung dieser Bohrungen 10 erforderlich ist, kann in einem weiteren Verfahrenschritt ein stoßendes und/oder ziehendes Entgraten mittels eines weiteren Schälwerkzeugs vorgenommen werden, die ähnlich wie die Stoßung der Längsnuten 8 erfolgt.

Wiederum nachfolgend werden mit einem weiteren angetriebenen Bohrwerkzeug die Kugel-Führungsbohrungen 11 eingebracht.

In sämtlichen der zuvor beschriebenen formgebenden Bearbeitungsschritte verbleibt das Werkstück in unveränderter Aufspannung.

Das bearbeitete Werkstück wird abschließend automatisiert aus dem Drehzentrum ausgetragen, um die Fertigung der nächsten Steuerbuchse zu ermöglichen.

## Patentansprüche

1. Verfahren zur Herstellung von Steuerbuchsen für kraftunterstützte Lenkungen, umfassend
a. Einspannen eines gegebenenfalls vorbearbeiteten Werkstücks in eine antreibbar um eine erste Achse (6a) drehbare Aufnahme (1) einer Bearbeitungsmaschine.
b. Ausdrehen einer entlang der ersten Achse (6a) gerichteten Zentralbohrung (6) aus dem Werkstück (7) mittels eines ersten Werkzeugs.
c. Automatische Selektion eines zweiten Werkzeugs mittels einer Vorrichtung zur Werkzeugauswahl (3).
d. Schälen einer Nut (8) aus einer Wandung der Zentralbohrung (6) mittels des zweiten Werkzeugs, wobei das zweite Werkzeug eine Relativbewegung zu dem Werkstück erfährt, die in Richtung der ersten Achse und in bezüglich der ersten Achse (6a) radialer Richtung verläuft und wobei das Werkstück in gegenüber Schritt a. unveränderter Aufspannung gehalten ist.

2. Verfahren nach Anspruch 1, **dadurch gekennzeichnet, dass** die Bearbeitungsmaschine ein Standard-Drehzentrum ist.

3. Verfahren nach Anspruch 1 oder 2, **dadurch gekennzeichnet, dass** während der Relativbewegung des zweiten Werkzeugs aus Schritt d. eine simultane Bewegung von zumindest zwei Achsen der Bearbeitungsmaschine erfolgt, wobei insbesondere das Werkstück (7) keine Bewegung erfährt.

4. Verfahren nach einem der vorhergehenden Ansprüche, **gekennzeichnet durch** den weiteren Verfahrensschritt
Vorsehen einer zu der ersten Achse nicht parallelen Bohrung (10, 11) mittels eines antreibbaren Werkzeugs, wobei das Werkstück (7) in gegenüber a. unveränderter Aufspannung gehalten ist.

5. Verfahren nach einem der vorhergehenden Ansprüche, **gekennzeichnet durch** den weiteren Verfahrensschritt
Abtragende Bearbeitung einer Längskante der Nut (8) zur kontrollierten Herstellung einer Steuerkante (8a), wobei das Werkstück in gegenüber Schritt a. unveränderter Aufspannung gehalten ist.

6. Verfahren nach Anspruch 5, **dadurch gekennzeichnet, dass** die Herstellung der Steuerkante (8a) mittels eines weiteren, für diesen Verfahrensschritt angepassten Werkzeugs (9) erfolgt.

7. Verfahren nach einem der vorhergehenden Ansprüche, **dadurch gekennzeichnet, dass** die Vorrichtung zur Werkzeugauswahl einen Werkzeugrevolver (3) umfasst.

8. Verfahren nach einem der vorhergehenden Ansprüche, **dadurch gekennzeichnet, dass** die Vorrichtung zur Werkzeugauswahl (3) zumindest für das zweite Werkzeug eine vollständig formschlüssige Halterung ermöglicht.

9. Verfahren nach einem der vorhergehenden Ansprüche, **dadurch gekennzeichnet, dass** der Verfahrensschritt d. eine Anzahl von aufeinander folgenden Schälbewegungen, insbesondere Stoßbewegungen, aufweist.

10. Verfahren nach Anspruch 9, **dadurch gekennzeichnet, dass** eine während einer der Schälbewegungen erzielte Schältiefe größer ist als die Schältiefe einer dieser Schälbewegung nachfolgenden Schälbewegung.

11. Verfahren nach einem der vorhergehenden Ansprüche, **dadurch gekennzeichnet, dass** ein Boden (8b) der Nut (8) eine Krümmung von zumindest annähernd konstantem Radius aufweist.

12. Verfahren nach Anspruch 11, **dadurch gekennzeichnet, dass** das Verhältnis zwischen dem Krümmungsradius der Nut (8b) und einem Radius der Zentralbohrung (6) zwischen etwa 1:1,7 und etwa 1:3 liegt.

13. Verfahren nach Anspruch 12, **dadurch gekennzeichnet, dass** das Verhältnis zwischen etwa 1:2 und etwa 1:2,5 liegt.

14. Verfahren nach einem der vorhergehenden Ansprüche, **dadurch gekennzeichnet, dass** das Werkstück (7) aus einem automatisiert zugeführten Materialstrang durch die Bear beitungsmaschine geformt wird.

15. Steuerbuchse für eine Servolenkung, hergestellt nach einem der Ansprüche 1 bis 14.

16. Steuerventil für eine kraftunterstützte Lenkung, umfassend eine Steuerbuchse (7) und einen in einer Bohrung (6) der Steuerbuchse (7) angeordneten und relativ zu der Steuerbuchse drehbar aufgenommenen Drehschieber,
wobei sowohl die Steuerbuchse (7) als auch der Drehschieber jeweils eine Anzahl von längsgerichteten Steuernuten (8) zur Steuerung einer Hydraulikflüssigkeit aufweisen,
**dadurch gekennzeichnet,**
**dass** zumindest eine der Längsnuten (8) der Steuerbuchse (7) eine zu einer Steuerkante (8a) ausgeformte Längskante aufweist.

17. Steuerventil nach Anspruch 16, **dadurch gekennzeichnet, dass** zumindest eine der Längsnuten des Drehschiebers eine zu einer Steuerkante ausgeformte Längskante aufweist.
